# EUROPEAN PATENT APPLICATION

(11) **EP 4 147 819 A1**
(43) Date of publication of application: **15.03.2023**
(21) Application number: 22195035.5
(22) Date of filing: 12.09.2022
(51) Int. Cl.: B23Q 1/00, B23Q 1/70, B23Q 17/00

(54) **ELECTROSPINDLE AND RELATED DIAGNOSTIC DEVICE**

(30) Priority: 14.09.2021 IT 202100023675
(71) Applicant: VEM S.p.A., 36015 Schio (VI) (IT)
(72) Inventor: TONELLO, Paolo, 36015 SCHIO (VI) (IT); VIGATO, Fabio, 36015 SCHIO (VI) (IT)
(74) Representative: De Filippis, Sara

(57) **Abstract**

The invention relates to an electrospindle intended to be installed in a machine tool, provided with a diagnostic device (100) including one or more sensors (1, 2, 3, 4) for detecting first data related to respective physical parameters of the operation of said electrospindle, a storage unit (5) operatively connected to the sensors (1, 2, 3, 4) and configured to receive and store said first data, characterized in comprising one or more connection ports (61, 62) operatively connected to said storage unit (5) and configured to transfer said first data from said storage unit (5) to a processing unit (6, 10), and a battery (7) operatively connected to said storage unit (5).

Object of the invention is also a machine tool comprising an electrospindle as described.

## Description

The present invention relates to an electrospindle equipped with a diagnostic device.

In detail, the invention which is the object of the present application relates to an electrospindle comprising a device for collecting and storing data related to one or more operating parameters of the electrospindle.

Such data collected at first during the operation of the electrospindle can later be processed and analyzed if necessary, for example, to trace the cause of a failure.

Electrospindles are electromechanical devices used in the field of machining.

They comprise two indispensable components, namely a rotating shaft to which a suitable tool, such as a drill or milling bit, is attached, and an electric motor that rotates the shaft so that machining can be carried out.

The construction characteristics of electrospindles may vary depending on their intended use, the material they will have to process, or the type of machining they will have to perform.

In any case, an electrospindle must guarantee precision and efficiency in chip removal, along with high reliability of operation.

For these reasons, it is usually preferred to include ancillary elements in the electrospindle, such as cooling systems and sensors for detecting numerous operating parameters, designed to detect any deviations from optimal operating conditions and to keep the electrospindle efficient over time.

Examples of commonly installed sensors are:
- accelerometers or sensors for detecting unwanted vibration of components;
- thermometers for detecting dangerous increases in temperature;
- shaft rotation speed detection sensors, such as encoders, phonic wheels, etc.; and
- displacement or strain sensors (e.g., transducers, load cells or strain gauges) for detecting excessive stresses or strains experienced by various components.

Through such sensors it is possible to obtain data regarding the origin of any malfunctions, or to adjust operating parameters in real time.

For example, through vibration detection sensors it is possible to point out misalignments between the rotating parts, which would lead to increased wear of the shaft bearings, or breakages as a result of shocks; further, through temperature sensors it is possible to detect poor heat dissipation produced by the moving parts or the motor, signaling the need for interventions on the cooling system or other components of the electrospindle.

At present, data on operating parameters detected by the sensors are processed by special electrospindle management software.

Such software is preset by the manufacturer to intervene when they detect deviations from the factory parameters.

However, the information about the detected parameters is not stored, and therefore is no longer available for possible later analysis, in case of repairs, for example for manufacturing defects covered by warranty, or in case the manufacturer wants to make use of the data collected during the life of the product to make improvements or upgrades.

It is an object of the present invention to provide an electrospindle equipped with a diagnostic device capable of ensuring the storage of data on operating parameters.

It is a further purpose of the present invention to provide an electrospindle capable of making parameter data available even after it has been collected, so that analysis and processing of the data can be carried out to improve the operation of the electrospindle.

Another scope is to provide an electrospindle that remains efficient for a longer time than the known technique.

In addition, it is an aim of the present invention to provide an electrospindle that is easier and cheaper to repair and maintain.

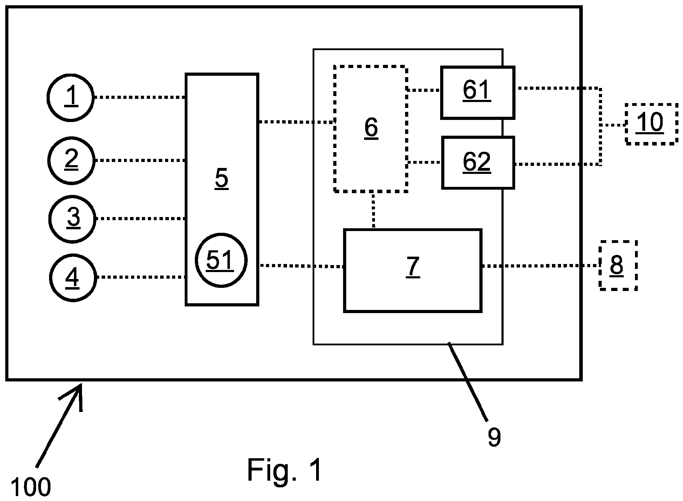

The present invention will now be described, by way of example but not limitation, according to some of its preferred embodiments, and with the aid of the attached Figure 1, in which a diagnostic device integrated with the electrospindle according to the invention is schematically depicted.

The 100 device is compact and easily installed even in already known electrospindles, and includes:
- one or more sensors 1, 2, 3, 4, e.g., accelerometers or sensors for detecting vibration, sensors for detecting temperature, sensors for detecting the rotational speed of the rotating parts of the electrospindle, sensors for detecting stress or deformation;
- a storage unit 5 or datalogger, optionally connected to a clock 51;
- an optional computer;
- one or more connection ports 61, 62;
- a battery 7.

Sensors 1, 2, 3, 4 are intended to be operatively connected to the mechanical and electrical components to be monitored of the electrospindle, and to collect over time first data on one or more physical parameters.

Sensors 1, 2, 3, 4 are operatively connected in turn to the storage unit 5, which records the first data collected by the sensors and stores them, to make them searchable at a later time after they have been collected.

Sensors may belong to the following types:
- accelerometers or sensors for detecting unwanted vibration of components;
- thermometers for detecting dangerous increases in temperature;
- shaft rotation speed detection sensors, such as encoders, phonic wheels, etc.; and
- displacement or strain sensors (e.g., transducers, load cells, or strain gauges) for detecting excessive stress or strain experienced by various components.

In a preferred embodiment, the processor is a processing unit 6 operatively connected to the storage unit 5.

The processing unit 6 controls the operation of the device 100 by means of dedicated software and which manages the outgoing and incoming flows through connection ports 61, 62 connected to it.

Alternatively, instead of processing unit 6, a processing unit 10 represented by the CNC machine control unit, which controls the electrospindle, can be provided.

In that case, ports 61, 62 are operationally connected directly to storage unit 5, and the flows are handled by external processing unit 10 in the machine tool.

Known machines currently, on the other hand, integrate storage unit 5 and processing unit 10 into the machine's architecture.

Connection ports 61, 62 are configured to transfer data of various types with external devices to which they can be connected as needed.

The first port 61 may be intended to exchange the first data with the external Processing Unit 10, e.g., a computer, PDA, smartphone, and the like, to be processed in the case of maintenance or analysis operations by the manufacturer at a time after a failure has occurred.

Additionally, such a first port 61 can be used by the manufacturer to transfer second data into the storage unit 5 from the external processing unit 10.

Such second data can be used as predefined threshold values for certain machining parameters of the electrospindle.

For example, the manufacturer or maintenance personnel can set threshold parameters (e.g., of temperature or shaft speed) depending on certain types of machining, or depending on the type of electrospindle on which the device 100 is installed.

A second port 62 can be intended for connection with external processing unit 10, represented by the CNC control unit of the machine tool on which the electrospindle is installed.

Through the second port 62, the first data are sent to processing unit 10 in real time during machine operation, so that any abnormalities in the machining parameters can be detected and corrected in a timely manner.

Such second port 62 allows device 100 to talk to the electrospindle to adjust its operation in real time, for example, to stop it in case of excessive temperature increases or component breakage.

Reliability of the electrospindle is thus increased, as the device can be further configured so that it signals any parameter anomalies via alarms, prompting action by user personnel.

An external power source 8 can optionally be connected to device 100, and can also come from the main power supply of the machine tool.

The device 100 also provides a battery 7 operatively connected to the processing unit 6, when present, and to the storage unit 5, to provide power supply in the absence of an external source 8; this is useful in the case, for example, of sudden power failures or during transport of the electrospindle when it is disconnected from the power supply.

In a preferred embodiment, the first data stored in storage unit 5 can be correlated more easily, during subsequent analysis steps, to the precise moment when a malfunction occurs, due to the presence of clock 51 operatively connected to storage unit 5 itself.

Clock 51 is powered by either external power source 8 or battery 7.

The battery 7, optional processing unit 6 and connection ports 61, 62 can be integrated into a board or circuit board 9.

In addition, the device can be configured to be associated with a unique serial number of the electrospindle in which it is installed, to facilitate its identification.

Advantageously, such a device allows a manufacturer to more easily and accurately identify the causes of electrospindle malfunction, attributable to improper use or damage caused during its operation or transport.

Through such a device it is possible to process the data collected by the storage unit independently of the computer integrated in the machine tool, or in the device itself.

The invention thus conceived and disclosed herein is susceptible to numerous modifications and variations, all within the scope of the inventive concept.

In addition, all details may be substituted by other technically equivalent elements.

Finally, the components used, provided they are compatible with the specific use, as well as the dimensions, may be any according to the needs and state of the art.

Where features and techniques mentioned in any claim are followed by reference marks, such reference marks have been appended for the sole purpose of increasing the intelligibility of the claims and, accordingly, such reference marks have no limiting effect on the interpretation of each element identified by way of example by such reference signs.

## Claims

1. Electrospindle intended to be installed in a machine tool, provided with a diagnostic device (100) including
one or more sensors (1, 2, 3, 4) for detecting first data related to respective physical parameters of the operation of said electrospindle,
a storage unit (5) operatively connected to the sensors (1, 2, 3, 4) and configured to receive and store said first data,
**characterized in** comprising one or more connection ports (61, 62) operatively connected to said storage unit (5) and configured to transfer said first data from said storage unit (5) to a processing unit (6, 10), and
a battery (7) operatively connected to said storage unit (5).

2. Electrospindle according to claim 1, **characterized in that** said one or more connection ports (61, 62) comprise a first port and/or a second port, configured to transfer first data from said storage unit (5) to said processing unit (6, 10) and/or to transfer second data from said processing unit (6, 10) to said storage unit (5) for being stored.

3. Electrospindle according to claim 2, **characterized in that** said processing unit (10) is a control unit integrated in said machine tool.

4. Electrospindle according to any one of claims 1-3, **characterized in** comprising a clock (51) connected to the storage unit (5).

5. Electrospindle according to any one of claims 1-4, **characterized in that** the processing unit (6) is a processing unit, integrated in said device (100), and is connected to said storage unit (5), said connection ports (61, 62) and said battery (7).

6. Electrospindle according to any one of claims 1-5, **characterized in that** said one or more connection ports (61, 62) and said battery (7) are integrated in a printed circuit board (9).

7. Electrospindle according to any one of claims 1-6, **characterized in that** the sensors (1, 2, 3, 4) are temperature sensors, and/or motion sensors, and/or displacement and/or strain detection sensors, and/or load cells, and/or strain gauges, and/or rotation detection sensors, and/or encoders, and/or tonewheels.

8. Electrospindle according to any one of claims 1-7, **characterized in that** the second data points are predefined threshold values for said physical parameters of the electrospindle.

9. A machine tool comprising an electrospindle according to any one of claims 1-8.
